(19) Europäisches Patentamt
European Patent Office
Office européen des brevets

(11) **EP 2 920 606 B1**

(12) **EUROPÄISCHE PATENTSCHRIFT**

(45) Veröffentlichungstag und Bekanntmachung des Hinweises auf die Patenterteilung:
**09.11.2022   Patentblatt 2022/45**

(21) Anmeldenummer: **13770875.6**

(22) Anmeldetag: **25.09.2013**

(51) Internationale Patentklassifikation (IPC):
**G01S 13/931** (2020.01)       **G01S 13/44** (2006.01)
**H01Q 21/29** (2006.01)

(52) Gemeinsame Patentklassifikation (CPC):
**G01S 13/931; G01S 13/4445; G01S 13/4454; H01Q 21/296;** G01S 2013/93271

(86) Internationale Anmeldenummer:
**PCT/EP2013/069918**

(87) Internationale Veröffentlichungsnummer:
**WO 2014/075839 (22.05.2014 Gazette 2014/21)**

(54) **VORRICHTUNG UND VERFAHREN ZUR ELEVATIONSWINKELBESTIMMUNG IN EINEM RADARSYSTEM**

APPARATUS AND METHOD FOR DETERMINING THE ELEVATION ANGLE IN A RADAR SYSTEM

DISPOSITIF ET PROCÉDÉ POUR LA DÉTERMINATION DE L'ANGLE DE HAUSSE DANS UN SYSTÈME DE RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.11.2012   DE 102012220773**

(43) Veröffentlichungstag der Anmeldung:
**23.09.2015   Patentblatt 2015/39**

(73) Patentinhaber: **Robert Bosch GmbH**
**70442 Stuttgart (DE)**

(72) Erfinder:
• **GROSS, Volker**
**71254 Ditzingen (DE)**
• **SCHOOR, Michael**
**70195 Stuttgart (DE)**

(56) Entgegenhaltungen:
WO-A1-2006/094510       US-A1- 2008 266 171
US-A1- 2012 112 953

EP 2 920 606 B1

## EP 2 920 606 B1

**Beschreibung**

Die vorliegende Erfindung betrifft eine Vorrichtung und ein Verfahren zur Elevationswinkelbestimmung in einem Radarsystem. Insbesondere betrifft die vorliegende Erfindung eine Vorrichtung und ein Verfahren zur Elevationswinkelbestimmung bei Auftreten mehrerer Ziele innerhalb einer Radarzelle.

Stand der Technik

Moderne Fahrzeuge werden zunehmend mit sogenannten Fahrassistenzsystemen ausgestattet, die den Fahrer eines Kraftfahrzeuges beispielsweise beim Führen des Fahrzeuges im fließenden Verkehr und auch beispielsweise beim Einparken des Fahrzeuges am Straßenrand unterstützen.

Für die Verarbeitungsprozesse eines Fahrassistenzsystemes ist es dabei wünschenswert, zwischen solchen Objekten zu unterscheiden, die von dem Kraftfahrzeug gefahrlos überfahren werden können (beispielsweise eine am Boden liegende leere Getränkedose) und solchen Objekten, die von dem Kraftfahrzeug keinesfalls überfahren werden dürfen (beispielsweise ein parkendes Auto oder ein Baum). Hierzu ist es hilfreich, neben der azimutalen Winkelposition eines detektierten Objektes auch zusätzlich den Elevationswinkel, das heißt die vertikale Position des Objektes, zu ermitteln.

Die deutsche Patentanmeldung DE 10 2010 064 348 A beschreibt einen Radarsensor für Kraftfahrzeuge. Die Antennenanordnung ist dabei derart ansteuerbar, dass sie eine zeitlich variierende Richtcharakteristik aufweist. Durch Auswertung von Radarechos kann ein Elevationswinkel von detektierten Objekten bestimmt werden.

Eine Möglichkeit zur Bestimmung eines Elevationswinkels besteht darin, eine Radar-Sensoranordnung um eine zusätzliche Elevationsantenne zu ergänzen. Diese Elevationsantenne besitzt eine Richtcharakteristik, die sich in Elevationsrichtung von der Charakteristik der Antennen des Hauptsystems unterscheidet. Werden nun die Amplituden der empfangenen Signale, welche von einem Sendeimpuls der Elevationsantenne herrühren, mit den Amplituden derjenigen Signalen verglichen, die aus einem Sendeimpuls der Hauptantennen herrühren, so kann aus diesem Vergleich der Amplituden auf einen Elevationswinkel eines Objektes geschlossen werden. Die Betrachtung der Amplituden kann sich hierbei entweder auf die Analyse der Amplitudenbeträge richten, oder alternativ auch die komplexen Amplituden nach Betrag und Phase auswerten.

Befinden sich jedoch in dem Sektor einer Radarzelle gleichzeitig mehr als ein Objekt, so ist in diesem Fall aus dem Amplitudenverhältnis der Empfangssignale keine eindeutige Bestimmung des Elevationswinkels mehr möglich.

US 2008/0266171 A1 betrifft ein Radarsystem zur Detektion einer dreidimensionalen Position eines Ziels. Radarechos werden von Antennen mit unterschiedlichen Richtcharakteristiken empfangen. Anschließend kann durch Auswertung der Amplitudenverhältnisses der empfangenen Radarechos ein Elevationswinkel bzw. eine Höhe eines Ziels bestimmt werden.

US 2012/0112953 A1 offenbart ein zwei- bzw. dreidimensionales Radarsystem. Das System bestimmt Azimuth- und Elevationswinkel einzelner Ziele. Sollen mehrere Ziele innerhalb eines Radarsektors detektiert werden, so wird die Antennencharakteristik des Radarsystems sequentiell auf jedes der einzelnen Ziele angepasst.

WO 2006/094510 A1 betrifft ein FM-CW Radar. Zur Bestimmung von Azimuth- und Elevationswinkel eines Ziels werden mehrere Antennenelemente auf zwei zueinander senkrecht stehenden Achsen angeordnet.

Es besteht daher ein Bedarf nach einem Radarsystem, das in der Lage ist auch bei mehr als einem Objekt innerhalb einer Radarzelle zuverlässig einen Elevationswinkel zu bestimmen. Ferner besteht auch ein Bedarf nach einem Radarsystem, das bei mehr als einem Objekt innerhalb eines Radarsegments eine zuverlässige Klassifikation der Objekte ermöglicht.

Offenbarung der Erfindung

Hierzu schafft die Vorliegende Erfindung ein Radarsystem und eine Verfahren zur Elevationswinkelbestimmung mit den Merkmalen der unabhängigen Patentansprüche.

Es ist eine Idee der vorliegenden Erfindung, basierend auf einer ermittelten Anzahl von detektierten Zielen und den jedem Ziel zugeordneten Azimutwinkel für jedes detektierte Ziel einen eigenen Elevationswinkel zu ermitteln. Die Bestimmung der Elevationswinkel erfolgt dabei mit Hilfe des kleinste-Quadrate-Ansatzes. Hierzu wird eine geeignete Steuerungsmatrix gebildet, die der Systemantwort des Radarsystems in die Azimutrichtungen der detektierten Ziele entsprechen. Basierend auf dieser Steuerungsmatrix können die Amplitudenverhältnisse der Empfangssignale und daraus wiederum in einfacher Weise die Elevationswinkel der Ziele bestimmt werden.

Ein Vorteil der vorliegenden Erfindung besteht darin, dass für die erfindungsgemäße Bestimmung der Elevationswinkel keine zusätzliche Sende- und Empfangshardware in Form von weiteren Antennenelementen oder Signalgeneratoren erforderlich ist. Der erfindungsgemäße Ansatz zur Bestimmung der Elevationswinkel kann unter Verwendung der bereits existierenden Sende- und Empfangshardware realisiert werden.

Ein weiterer Vorteil der vorliegenden Erfindung besteht darin, dass auch innerhalb einer einzigen Radarzelle bei Auftreten mehrerer Objekte die Elevationswinkel korrekt abgeschätzt werden können. Somit können aus diesen Informationen weitere Rückschlüsse für eine zuverlässige Klassifikation gezogen werden.

In einer Ausführungsform umfasst die Sende- und Empfangseinheit eine Signalerzeugungsvorrichtung, eine Hauptantenne und eine Elevationsantenne. Vorzugsweise besitzt die Elevationsantenne dabei eine Richtcharakteristik, die sich von der Hauptantenne unterscheidet. Durch einen Vergleich der Empfangssignale, die aus Sendeimpulsen der Hauptantenne einerseits und Sendeimpulsen aus der Elevationsantenne andererseits herrühren, kann somit auch eine einfache und zuverlässige Bestimmung von Elevationswinkeln erfolgen. In einer alternativen Ausführungsform besitzen Hauptantenne und Elevationsantenne die gleiche Richtcharakteristik, weisen jedoch unterschiedliche Phasenzentren auf.

In einer bevorzugten Ausführungsform sendet die Sende- und Empfangseinheit eine Mehrzahl von Signalen über die Hauptantenne aus und sendet ferner mindestens ein Signal über die Elevationsantenne aus, wobei das über die Elevationsantenne ausgesendete Signal einem der über die Hauptantenne ausgesendeten Signale entspricht. Somit wird sowohl über die Hauptantenne als auch über die Elevationsantenne mindestens ein identisches Signal ausgesendet. Dies ermöglicht einen einfachen Vergleich der Amplituden in den jeweiligen Empfangssignalen. Damit können besonders einfach Rückschlüsse auf die jeweiligen Elevationswinkel gezogen werden.

In einer bevorzugten Ausführungsform wird die Steuerungsmatrix aus Parametern von Antennendiagrammen gebildet. Insbesondere wird die Steuerungsmatrix vorzugsweise aus den Parametern in den Schnittebenen der zuvor bestimmten Azimutwinkel der Ziele durch die Antennendiagramme der verwendeten Antennen gebildet. Eine solche Steuerungsmatrix bildet somit die Richtcharakteristik des Radarsystems in Richtung der detektierten Ziele ab.

Gemäß einer Ausführungsform umfasst die Vorrichtung zur Elevationswinkelbestimmung ferner eine Speichervorrichtung zur Speicherung vorbestimmter Zusammenhänge zwischen Signalverhältnissen und Elevationswinkeln. Auf diese Weise ist es möglich, bereits vorab zu den in Frage kommenden Amplitudenverhältnissen jeweils einen Elevationswinkel zu berechnen und diese Zusammenhänge in einer Tabelle abzulegen. Somit entfällt im operativen Betrieb der erforderliche hohe Rechenaufwand und die Elevationswinkelbestimmung kann besonders schnell ausgeführt werden.

Gemäß einer Ausführungsform ist das Radarsignal ein FMCW-Radarsignal (Frequency Modulated Continuous Wave Radar). Solche Radarsysteme sind für die Ermittlung von Entfernung und Geschwindigkeit besonders gut geeignet.

Eine bevorzugte Ausführungsform umfasst ein Kraftfahrzeug mit einem Radarsystem, das eine erfindungsgemäße Vorrichtung zur Elevationswinkelbestimmung umfasst.

Das Verfahren zur Elevationswinkelbestimmung umfasst ferner einen Schritt zur Invertierung der Steuerungsmatrix. Durch eine solche Invertierung kann auf einfache Weise ein Gleichungssystem aufgestellt und gelöst werden, das die Systemverhältnisse zur Elevationswinkelbestimmung widerspiegelt.

Gemäß einer weiteren Ausführungsform umfasst das Verfahren zur Elevationswinkelbestimmung ferner einen Schritt zur Klassifikation der detektierten Ziele. Vorzugsweise umfasst der Schritt zur Klassifikation eine Unterscheidung zwischen durch ein Kraftfahrzeug überfahrbare und nicht durch ein Kraftfahrzeug überfahrbare Ziele. Eine solche Klassifikation kann durch die erfindungsgemäße optimierte Elevationswinkelbestimmung zuverlässig ausgeführt werden und ermöglicht ein Fahrassistenzsystem mit verbesserten Eingangsparametern.

Obwohl die vorliegende Erfindung mit Bezug auf ein Radarsystem in Fahrzeugen beschrieben wird, ist die Erfindung nicht darauf beschränkt.

Kurze Beschreibung der Figuren

Es zeigen:

Fig. 1    eine schematische Darstellung einer Draufsicht auf ein Zwei-Ziel-Szenario;

Fig. 2    eine schematische Darstellung einer Seitenansicht eines Zwei-Ziel-Szenarios,

Fig. 3    eine schematische Darstellung einer Vorrichtung zur Elevationswinkelbestimmung gemäß einer Ausführungsform der Erfindung; und

Fig. 4    eine schematische Darstellung eines Verfahrens gemäß einer Ausführungsform der Erfindung.

Die im Folgenden verwendete Richtungsterminologie, das heißt Begriffe wie "links", "rechts", "oben", "unten", "vorne", "hinten" und dergleichen wird lediglich zum besseren Verständnis der Zeichnungen verwendet. Dies stellt in keinem Fall eine Beschränkung der Allgemeinheit dar. Die in den Figuren dargestellten Zeichnungen sind zum Teil perspektivisch und aus Gründen der Übersichtlichkeit nicht notwendigerweise maßstabsgetreu dargestellt. Die gezeigten Komponenten und Elemente, sowie die dargestellten Prinzipien können im Rahmen der Überlegungen eines Fachmanns variieren und an die jeweilige Anwendung angepasst werden. Gleiche Bezugszeichen bezeichnen im Allgemeinen gleichartige oder gleichwirkende Komponenten.

Radarsysteme im Sinne der vorliegenden Erfindung sind zunächst alle Arten von Systemen, die ein Signal aussenden und einen von der Umgebung reflektierten Anteil dieses ausgesendeten Signales empfangen und daraufhin basierend auf den Zusammenhängen zwischen gesendetem Signal und dem empfangenen Signal Rückschlüsse auf die Umgebung ziehen. Vorzugsweise senden solche Systeme elektromagnetische Strahlung aus. Bei den dabei ausgesendeten Signalen kann es sich sowohl um kurze gepulste Signale handeln, als auch um Signale, die über einen längeren Zeitraum ausgesendet werden. Die Signale können dabei über die Zeit, die Intensität und/oder die Frequenz variieren. Insbesondere umfassen Radarsysteme im Sinne der vorliegenden Erfindung sogenannte FMCW-Radarsysteme. Solche Systeme senden über einen vorgegebenen Zeitraum ein kontinuierliches Signal aus, wobei die Frequenz des Signals über der Zeit variiert wird. Dabei können durch geeignete Variationen der Signalfrequenz weitere Rückschlüsse über die Anzahl, die Position und die Relativgeschwindigkeit der zu detektierenden Ziele gezogen werden.

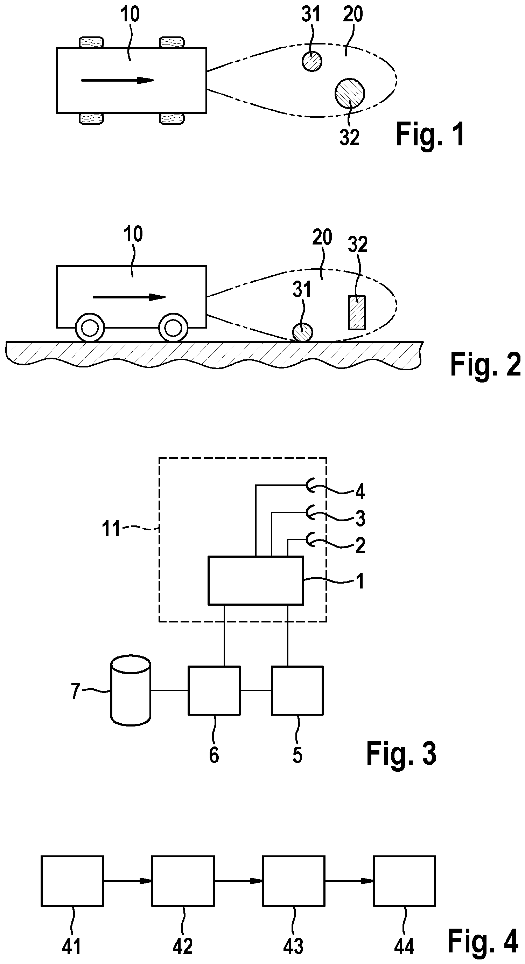

Figur 1 zeigt schematisch eine beispielhafte Draufsicht auf ein Szenario, bei dem sich mehrere Objekte 31, 32 innerhalb einer Radarzelle 20 befinden. Beispielsweise kann es sich hierbei um ein Kraftfahrzeug 10 handeln, in das ein erfindungsgemäßes Radarsystem eingebaut ist. Von dem dargestellten Kraftfahrzeug 10 aus nach rechts weisend ist beispielhaft eine Radarzelle 20 dargestellt. Innerhalb dieser Radarzelle 20 befinden sich exemplarisch zwei Ziele 31 und 32. Beispielsweise kann es sich bei dem Ziel 31 um eine am Boden liegende leere Getränkedose oder ähnliches handeln. Solch ein Objekt könnte von einem Kraftfahrzeug gefahrlos überfahren werden. Bei dem weiteren Zielobjekt 32 könnte es sich beispielsweise um ein parkendes Kraftfahrzeug oder einen Baum handeln. Für solch ein Objekt sollte ein Zusammentreffen mit einem Kraftfahrzeug vermieden werden.

Obwohl hier, wie auch im Folgenden stets eine Radarzelle mit zwei Zielobjekten betrachtet wird, so kann die vorliegende Erfindung grundsätzlich auch mit drei oder mehr Zielobjekten innerhalb einer Radarzelle durchgeführt werden. Die Betrachtung von nur zwei Zielobjekten innerhalb einer Radarzelle dient lediglich dem besseren Verständnis und stellt keine Beschränkung der Erfindung dar.

Figur 2 zeigt eine schematische Darstellung einer Seitenansicht des Szenarios aus Figur 1. Wie aus dieser Figur zu erkennen ist, befinden sich die beiden Objekte 31 und 32 auf unterschiedlicher Höhe, jedoch befinden sich beide innerhalb einer gemeinsamen Radarzelle 20, die durch das Radarsystem ausgeleuchtet wird.

Figur 3 zeigt den schematischen Aufbau eines Radarsystems zur Detektion von Zielobjekten. Das Radarsystem umfasst dabei zunächst eine Sende- und Empfangseinheit 11. Innerhalb dieser Sende- und Empfangseinheit 11 werden von einer Signalverarbeitungseinheit 1 zunächst ein oder mehrere Radarsignale erzeugt und über eine Hauptantenne 3 ausgesendet. Die dabei ausgesendeten elektromagnetischen Wellen treffen auf die Zielobjekte 31, 32 und werden von diesen Zielobjekten 31, 32 reflektiert. Ein Teil der reflektierten elektromagnetischen Strahlung wird daraufhin von der Empfangsantenne 2 empfangen und von der Signalverarbeitungseinheit 1 aufbereitet.

Für eine Auflösung mehrerer Ziele in Azimutrichtung können dabei durch die Signalverarbeitungseinheit 1 mehrere verschiedenartige Signale generiert werden. Beispielsweise können im Fall eines FMCW-Radars Signale erzeugt werden, bei denen die Frequenz über die Zeit linear ansteigt oder abfällt. Durch mehrere solcher Signale mit unterschiedlichem Anstieg oder Abfall in der Frequenz ist damit eine eindeutige Unterscheidung mehrerer Ziele möglich.

Durch die Anwendung geeigneter Verfahren kann insbesondere bei FMCW-Radarsystemen somit auch bei mehreren Zielobjekten 31, 32 innerhalb einer Radarzelle 20 einen eindeutige Bestimmung von Entfernung, Relativgeschwindigkeit und Azimutwinkel erfolgen.

Darüber hinaus kann die Auflösung mehrerer Ziele innerhalb einer Radarzelle 20 auch durch eine Empfangsantenne 2 mit mehr als einem Empfangskanal verbessert werden. Für eine eindeutige Auflösung mehrerer Ziele ist es dabei erforderlich, dass die Anzahl der Empfangskanäle in dem Radarsystem die Anzahl der zu detektierenden Ziele übersteigt. Andernfalls ist eine Ermittlung der Winkelposition der Zielobjekte nicht möglich.

Zur Bestimmung eines Elevationswinkels eines Ziels innerhalb einer Radarzelle wird darüber hinaus durch eine weitere Elevationsantenne 4 zusätzlich ein Signal ausgesendet, das von einem Zielobjekt ebenfalls reflektiert wird. Auch die Reflektion dieses Signals wird durch die Empfangsantenne 2 erfasst und weitergeleitet. Besitzen Hauptantenne 3 und Elevationsantenne 4 eine unterschiedliche Ausrichtung, so dass sich die Hauptstrahlrichtungen dieser beiden Antennen unterscheiden, so wird in Abhängigkeit der vertikalen Position eines Zielobjektes das Verhältnis der Amplitude der jeweiligen Empfangssignale aus Hauptantenne 3 und Elevationsantenne 4 variieren. Durch Analyse dieses Amplitudenverhältnisses kann daraufhin ein Elevationswinkel für das Zielobjekt ermittelt werden. Die Auswertung der Amplitudenverhältnisse kann dabei sowohl auf einer vollständigen Analyse der komplexen Amplituden beruhen, das heißt, die Analyse erfolgt sowohl in Bezug auf Betrag als auch auf die Phase. Alternativ kann die Analyse auch ausschließlich unter Berücksichtigung der Amplitudenbeträge erfolgen.

Das über die Elevationsantenne 4 ausgesendete Signal sollte hierzu jedoch vorzugsweise einem Signal entsprechen, das in gleicher Form auch über die Hauptantenne 3 ausgesendet wurde, damit ein Vergleich der Signalamplituden direkt möglich ist.

Die oben beschriebene Bestimmung des Elevationswinkels führt jedoch nur dann zum Erfolg, wenn sich innerhalb einer Radarzelle nur ein einziges Zielobjekt befindet. Andernfalls ist auf diese Weise keine verwertbare Aussage über einen Elevationswinkel möglich.

Um auch bei mehreren Zielobjekten innerhalb einer Radarzelle zu einer korrekten Bestimmung der jeweiligen Elevationswinkel zu gelangen, müssen in diesem Fall zunächst die Parameter der Zielobjekte in Azimutrichtung bestimmt werden. Hierzu ermittelt die Vorrichtung 5 zur Bestimmung azimutaler Zielparameter zunächst eine Anzahl $n$ von detektierten Zielen und bestimmt für jedes dieser detektierten Ziele einen dazugehörigen Azimutwinkel $\theta$. Ferner können in diesem Zusammenhang auch weitere Parameter, wie Entfernungen der Zielobjekte und Relativgeschwindigkeit bestimmt werden.

Sind Anzahl $n$ der Ziele und deren Azimutwinkel $\theta_n$ bekannt, so wird daraus eine sogenannte Steuerungsmatrix $A$ gebildet.

$$A = [a(\theta_1), a(\theta_2), \dots, a(\theta_n)]$$

Die Größe dieser Steuerungsmatrix $A$ hängt dabei von der Anzahl n der detektierten Ziele ab. Für jedes detektierte Ziel umfasst die Steuermatrix $A$ jeweils eine Spalte. Die einzelnen Spalten dieser Steuerungsmatrix werden jeweils durch die Steuerungsvektoren $a(\theta)$ gebildet. Diese Steuerungsvektoren $a(\theta)$ bestimmen sich aus den Parametern der Antennendiagramme in Abhängigkeit der jeweiligen Azimutwinkel $\theta$ für die einzelnen Ziele. Aus einem einfallenden Signal s ergibt sich daher gemäß der Steuerungsmatrix $A$ theoretisch ein empfangenes Signal x durch

$$x = A \cdot s$$

Basierend auf dieser Gleichung lässt sich nun die Amplitude der einzelnen einfallenden Signale folgendermaßen abschätzen:

$$\hat{s} = A^{\dagger} \cdot x$$

wobei $\hat{s}$ die Abschätzung der Amplituden der Signale ist, x das empfangene Signal und $A^{\dagger}$ die Pseudoinverse in der Steuerungsmatrix $A$ darstellt. Somit lassen sich basierend auf dieser Gleichung die Amplituden der einzelnen einfallenden Signale abschätzen.

Zur Ermittlung der Elevationswinkel bei mehr als einem Zielobjekt innerhalb des Radarsegments stellt daher die Vorrichtung 6 zur Elevationswinkelbestimmung zunächst eine Steuerungsmatrix $A$ auf, wozu die zuvor ermittelten azimutalen Zielparameter herangezogen werden. Daraufhin wird eine pseudoinverse Matrix $A^{\dagger}$ dieser Steuerungsmatrix gebildet. Dies kann beispielsweise nach dem Moore-Penrose-Verfahren erfolgen. Durch Multiplikation der pseudoinversen Steuerungsmatrix $A^{\dagger}$ mit einem Vektor x aus den Empfangssignalen können daraufhin die Amplituden der einfallenden Signale in die jeweiligen Azimutrichtungen abgeschätzt werden. Nachdem die Abschätzung $\hat{s}$ der jeweiligen Signalamplituden vorliegen, kann das Verhältnis der Amplituden zwischen dem Signal von der Hauptantenne 3 und dem Signal von der Elevationsantenne 4 ermittelt werden. Aus dem somit ermittelten Amplitudenverhältnis $\hat{s}$ der Signale kann daraufhin für jedes einzelne Ziel eine Abschätzung des Elevationswinkels getroffen werden.

Um dabei nicht jedes Mal die komplexen Rechenoperationen für die Bestimmung des Elevationswinkels aus dem Amplitudenverhältnis erneut durchführen zu müssen, kann zuvor eine Tabelle erstellt werden, indem die Beziehung zwischen Amplitudenverhältnis und dem daraus resultierenden Elevationswinkel in Tabellenform abgelegt ist. Eine solche Tabelle kann beispielsweise in einem Speicher 7 abgelegt werden. Bei Bedarf greift die Vorrichtung 6 zur Bestimmung des Elevationswinkels auf den Speicher 7 zu und kann daraufhin ohne weitere komplexe Rechenoperationen unmittelbar den jeweiligen Elevationswinkel bestimmen.

Auf gleiche Weise wird auch eine Steuermatrix A bereits vorab invertiert und eine oder mehrere invertierte Steuermatrizen werden in geeigneter Form abgespeichert. Diese invertierten Steuermatrizen werden in einem weiteren Speicherbereich des Speichers 7 abgelegt. Bei Bedarf kann darauf hin eine geeignete intertierte Steuerungsmatrix aus diesem Speicher 7 ausgelesen und für eine rasche Ermittlung der Elevationswinkelschätzung herangezogen werden.

Somit ist insbesondere für sehr zeitkritische Anwendungen, wie sie gerade bei der Echtzeitauswertung während der Fahrt eines Kraftfahrzeuges erforderlich sind, eine rasche Ermittlung von Elevationswinkeln bei mehr als einem Zielobjekt möglich.

In dem oben beschriebenen Ausführungsbeispiel wurde die Elevationswinkelbestimmung durch Aufstellen einer Steuerungsmatrix und anschließendes Invertieren dieser Steuerungsmatrix durchgeführt. Darüber hinaus sind in dem erfindungsgemäßen Ansatz auch andere Verfahren möglich, die darauf beruhen, das Systemverhalten des Radarsystems in einer Steuerungsmatrix zu beschreiben und anschießend basierend auf dem ermittelten Systemverhalten eine Elevationswinkelschätzung zu berechnen.

Durch die somit erfolgte Abschätzung der Elevationswinkel bei mehr als einem Ziel innerhalb einer Radarzelle ist es auch bei mehr als einem Zielobjekt in einer Radarzelle möglich, die Zielobjekte präzise zu klassifizieren. Insbesondere ist es möglich zwischen am Boden liegenden Objekten zu unterscheiden, die gefahrlos durch ein Kraftfahrzeug überfahren werden können und auf der anderen Seite sicher solche Objekte zu erkennen, die auf keinen Fall mit einem Kraftfahrzeug kollidieren dürfen. Eine solche zuverlässige Klassifizierung ermöglicht daher auch den verbesserten Aufbau von Fahrassistenzsystemen.

Figur 4 zeigt ein Verfahren für eine Elevationswinkelbestimmung in einem Radarsystem. In einem ersten Schritt 41 werden dabei zunächst die azimutalen Zielparameter ermittelt. Diese Zielparameter sind, wie bereits zuvor beschrieben, einerseits die Anzahl der detektierten Ziele und darüber hinaus auch für jedes der detektierten Ziele eine azimutale Winkelabschätzung. Weitere Parameter, wie Entfernung der Zielobjekte und/oder Relativgeschwindigkeit der Zielobjekte zu dem Radarsystem können hierbei ebenfalls bestimmt werden.

In einem weiteren Schritt 42 wird nun basierend auf diesen azimutalen Zielparametern eine Steuerungsmatrix A gebildet. Diese Steuerungsmatrix A umfasst für jedes detektierte Zielobjekt eine Spalte mit einem entsprechenden Steuerungsvektor a. Der jeweilige Steuerungsvektor a stellt dabei jeweils einen Vektor mit der Systemantwort in der entsprechenden Azimutrichtung dar.

In einem weiteren Schritt 43 wird daraufhin die Pseudoinverse $A^\dagger$ dieser Steuerungsmatrix $A$ gebildet. Beispielsweise kann diese pseudoinverse Steuerungsmatrix $A^\dagger$ gemäß dem Moore-Penrose-Verfahren ermittelt werden. Alternative Verfahren zur Ermittlung einer pseudoinversen Matrix sind selbstverständlich ebenso möglich.

Unter Einbeziehung der berechneten pseudoinversen Steuerungsmatrix $A^\dagger$ können daraufhin in Schritt 44 die Amplitudenverhältnisse $\hat{s}$ der einfallenden Signale ermittelt werden und basierend auf den so ermittelten Amplitudenverhältnissen $\hat{s}$ die jeweiligen Elevationswinkel für die einzelnen detektierten Zielobjekte ermittelt werden.

Alternativ zur Bildung einer Pseudoinversen, sind andere Verfahren möglich, die darauf beruhen, das Systemverhalten des Radarsystems darzustellen und eine Lösung dieses Systemverhaltens für eine Winkelschätzung mehrerer Zielobjekte durchzuführen.

Basierend auf den so ermittelten Azimut- und Elevationswinkeln für jedes einzelne Zielobjekt ist somit eine weitaus bessere Klassifikation der einzelnen Ziele möglich, als dies ohne Elevationswinkelbestimmung möglich wäre.

Insbesondere kann durch eine zuverlässige Elevationswinkelbestimmung sehr gut zwischen am Boden liegenden Objekten und solchen Objekten unterschieden werden, die sich in einem Abstand vom Boden befinden. Dabei ist es gerade für Fahrassistenzsysteme von entscheidender Bedeutung, eine sichere und zuverlässige Klassifikation von Zielobjekten durchführen zu können und dabei zwischen Objekten zu unterscheiden, die gefahrlos durch ein Fahrzeug überfahren werden können und solchen Objekten, die nicht überfahren werden dürfen.

Gemäß dem erfindungsgemäßen Ansatz zur Elevationswinkelbestimmung ist es darüber hinaus weiterhin möglich, auch mit nur einer Sendeantenne Azimutwinkel und Elevationswinkel mehrerer Zielobjekte zu bestimmen. Hierzu erfolgen zunächst eine azimutale Winkelschätzung und anschließend eine Schätzung der Elevationswinkel.

Für die Bestimmung der Azimutwinkel der Mehrzahl von N Zielobjekten, muss die Anzahl der bereitgestellten Empfangskanäle die Anzahl der zu detektierenden Ziele übersteigen. Das heißt, für N zu detektierende Zielobjekte sind mindestens N+1 Empfangskanäle erforderlich. Aus den ermittelten Signalen wird daraufhin, wiederum auf erfindungsgemäße Weise eine Lösung für die Winkelabschätzungen berechnet.

Nachdem anschließend die Azimutwinkel der Ziele bestimmt wurden, erfolgt mittels weiterer N+1 Empfangskanäle die Bestimmung der Elevationswinkel, nach dem erfindungsgemäßen Ansatz durch Lösen des entsprechenden Gleichungssystems. Durch dieses zweistufige Winkelschätzverfahren kann eine besonders effiziente Azimut- und Elevationswinkelbestimmung bei Mehrzielszenarien realisiert werden.

Zusammenfassend betrifft die vorliegende Erfindung die Bestimmung von Elevationswinkeln für den Fall, dass sich innerhalb einer Radarzelle 20 mehr als ein Zielobjekt 31, 32 befinden. Durch das erfindungsgemäße Abschätzen der Elevationswinkel in Mehrzielszenarien können auch in solchen Fällen sowohl Azimut- als auch Elevationswinkel ermittelt werden und daraufhin eine zuverlässige Klassifikation der jeweiligen Zielobjekte 31, 32 erfolgen. Insbesondere betrifft die vorliegende Erfindung auch ein Kraftfahrzeug 10 mit einem Radarsystem, das eine erfindungsgemäße Azimut- und Elevationswinkelabschätzung umfasst.

**Patentansprüche**

1. Radarsystem, umfassend:

    eine Sende- und Empfangseinheit (11) zum Aussenden und Empfangen von Radarsignalen;
    eine Vorrichtung (5) zur Bestimmung azimutaler Zielparameter, die dazu ausgelegt ist, einen Azimutwinkel für ein detektiertes Ziel zu bestimmen
**dadurch gekennzeichnet, dass**
die Vorrichtung (5) zur Bestimmung azimutaler Zielparameter ferner dazu ausgelegt ist, eine Anzahl von detektierten Zielen (31, 32) zu ermitteln und für jedes detektierte Ziel (31, 32) einen Azimutwinkel zu bestimmen; wobei das Radarsystem ferner eine Vorrichtung (6) zur Elevationswinkelbestimmung umfasst, die dazu ausgelegt ist, basierend auf den azimutalen Zielparametern eine Steuerungsmatrix **A** zu bilden, eine Pseudoinverse der Steuerungsmatrix zu bilden, und unter Einbeziehung der Pseudoinversen der Steuerungsmatrix die Amplitudenverhältnisse der Empfangssignale zu berechnen und aus den Amplitudenverhältnissen der Empfangssignale für jedes detektierte Ziel (31, 32) einen eigenen Elevationswinkel zu bestimmen, wobei die Steuerungsmatrix **A** wie folgt gebildet wird:

$$\mathbf{A} = [a(\theta_1),\ a(\theta_2),\dots,\ a(\theta_n)$$

mit:

n : Anzahl der detektierten Ziele,
$\theta_1, \dots, \theta_n$ : Azimutwinkel der jeweiligen Ziele, und
$a(\theta_1), a(\theta_2), ..., a(\theta_n)$ : Steuerungsvektoren aus den Parametern der Antennendiagramme in Abhängigkeit der jeweiligen Azimutwinkel $\theta_1, ..., \theta_n$,

wobei vorab invertierte Steuermatrizen in einem Speicher (7) des Radarsystems abgespeichert sind.

2. Radarsystem nach Anspruch 1 wobei die Sende- und Empfangseinheit (11) eine Signalerzeugungsvorrichtung (1), eine Hauptantenne (3) und eine Elevationsantenne (4) umfasst.

3. Radarsystem nach Anspruch 2, wobei die Sende- und Empfangseinheit (11) eine Mehrzahl von Signalen über die Hauptantenne (3) aussendet und mindestens ein Signal über die Elevationsantenne (4) aussendet, das einem der über die Hauptantenne (3) ausgesendeten Signale entspricht.

4. Radarsystem nach einem der vorherigen Ansprüche, wobei der Speicher (7) dazu ausgelegt ist, vorbestimmte Zusammenhänge zwischen Signalverhältnissen und Elevationswinkel und / oder zur Speicherung von vorberechneten Zwischenergebnissen auf Basis der Steuerungsmatrix **A** zu speichern.

5. Radarsystem nach einem der vorherigen Ansprüche, wobei das Radarsignal ein FMCW-Radarsignal ist.

6. Kraftfahrzeug mit einem Radarsystem nach einem der vorherigen Ansprüche.

7. Verfahren zur Elevationswinkelbestimmung in einem Radarsystem, mit den Schritten:

Aussenden und Empfangen von Radarsignalen mittels eine Sende- und Empfangseinheit (11);
Bestimmung (41) von azimutalen Zielparametern, wobei die azimutalen Zielparameter eine azimutale Winkelschätzung umfasst;
**dadurch gekennzeichnet, dass**
der Schritt (41) zur Bestimmung (41) von azimutalen Zielparametern eine Anzahl detektierter Ziele und eine azimutale Winkelschätzung für jedes detektierte Ziel bestimmt;
wobei das Verfahren ferner die folgenden Schritte umfasst:

Bilden (42) einer Steuerungsmatrix **A** basierend auf den azimutalen Zielparametern,
Bilden (43) einer Pseudoinversen der Steuerungsmatrix **A,**
Berechnen von Amplitudenverhältnissen der Empfangssignale unter Einbeziehung der Pseudoinversen der Steuerungsmatrix A, und
Berechnen (44) eines eigenen Elevationswinkels für jedes detektierte Ziel (31, 32) aus den berechneten Amplitudenverhältnissen der Empfangssignale,
wobei die Steuerungsmatrix **A** wie folgt gebildet wird:

$$\mathbf{A} = [a(\theta_1),\ a(\theta_2),\dots,\ a(\theta_n)$$

mit:

n : Anzahl der detektierten Ziele,

$\theta_1, ..., \theta_n$ : Azimutwinkel der jeweiligen Ziele, und

$a(\theta_1), a(\theta_2), ..., a(\theta_n)$ : Steuerungsvektoren aus den Parametern der Antennendiagramme in Abhängigkeit der jeweiligen Azimutwinkel $\theta_1,..., \theta_n$,

wobei vorab invertierte Steuermatrizen verwendet werden.

8.  Verfahren nach Anspruch 7, ferner umfassend einen Schritt zur Klassifikation der detektierten Ziele.

**Claims**

1.  Radar system, comprising:

    a transmitter and receiver unit (11) for transmitting and receiving radar signals;
    a device (5) for determining azimuthal target parameters, which is designed to determine an azimuth angle for a detected target,
    **characterized in that**
    the device (5) for determining azimuthal target parameters is further designed to ascertain a number of detected targets (31, 32) and to determine an azimuth angle for each detected target (31, 32);
    the radar system further comprising an elevation angle determination device (6) which, on the basis of the azimuthal target parameters, is designed to form a control matrix **A,** to form a pseudo-inverse of the control matrix, and to calculate the amplitude relationships of the received signals with inclusion of the pseudo-inverse of the control matrix, and to determine a separate elevation angle for each detected target (31, 32) from the amplitude relationships of the received signals,
    the control matrix **A** being formed as follows:

    $$\mathbf{A} = [a(\theta_1), \; a(\theta_2), \; ..., \; a(\theta_n)]$$

    where:

    n number of the detected targets
    $\theta_1, ..., \theta_n$ azimuth angle of the respective targets, and
    $a(\theta_1), a(\theta_2), ..., a(\theta_n)$ control vectors of the parameters of the antenna diagrams on the basis of the respective azimuth angles $\theta_1, ..., \theta_n$,

    with control matrices inverted in advance being stored in a memory (7) of the radar system.

2.  Radar system according to Claim 1, wherein the transmitter and receiver unit (11) comprises a signal generation device (1), a main antenna (3) and an elevation antenna (4).

3.  Radar system according to Claim 2, wherein the transmitter and receiver unit (11) transmits a plurality of signals via the main antenna (3) and transmits at least one signal via the elevation antenna (4), said signal corresponding to one of the signals transmitted via the main antenna (3).

4.  Radar system according to any one of the preceding claims, wherein the memory (7) is designed to store predetermined relationships between signal relationships and elevation angles and/or to store precalculated intermediate results on the basis of the control matrix **A.**

5.  Radar system according to any one of the preceding claims, wherein the radar signal is an FMCW radar signal.

6.  Motor vehicle comprising a radar system according to any one of the preceding claims.

7.  Elevation angle determination method in a radar system, including the steps of:

transmitting and receiving radar signals by means of a transmitter and receiver unit (11);
determining (41) azimuthal target parameters, with the azimuthal target parameters comprising an azimuthal angle estimate;
**characterized in that**
the step (41) for determining (41) azimuthal target parameters determines a number of detected targets and an azimuthal angle estimate for each detected target;
the method further comprising the following steps:

forming (42) a control matrix **A** on the basis of the azimuthal target parameters,
forming (43) a pseudo-inverse of the control matrix **A,**
calculating amplitude relationships of the received signals with inclusion of the pseudo-inverse of the control matrix A, and
calculating (44) a separate elevation angle for each detected target (31, 32) from the calculated amplitude relationships of the received signals,
the control matrix **A** being formed as follows:

$$\mathbf{A} = [a(\theta_1), \ a(\theta_2), \ ..., \ a(\theta_n)]$$

where:

n number of the detected targets,
$\theta_1, ..., \theta_n$ azimuth angle of the respective targets, and
$a(\theta_1), a(\theta_2), ..., a(\theta_n)$ control vectors of the parameters of the antenna diagrams on the basis of the respective azimuth angles $\theta_1, ..., \theta_n$,

with control matrices inverted in advance being used.

8. Method according to Claim 7, further comprising a step for classifying the detected targets.


**Revendications**

1. Système de radar, comprenant :

une unité d'émission et de réception (11) pour émettre et recevoir des signaux radar ;
un dispositif (5) pour déterminer des paramètres cibles azimutaux, qui est conçu pour déterminer un angle d'azimut pour une cible détectée,
**caractérisé en ce que** le dispositif (5) pour la détermination de paramètres cibles azimutaux est en outre conçu pour établir un nombre de cibles détectées (31, 32) et pour déterminer un angle d'azimut pour chaque cible détectée (31, 32) ;
le système de radar comprenant en outre un dispositif (6) pour la détermination d'un angle d'élévation, qui est conçu pour former une matrice de commande A sur la base des paramètres cibles azimutaux, pour former un pseudo-inverse de la matrice de commande, et en intégrant le pseudo-inverse de la matrice de commande, pour calculer des rapports d'amplitude des signaux de réception, et pour déterminer à partir des rapports d'amplitude des signaux de réception un angle d'élévation propre pour chaque cible détectée (31, 32),
la matrice de commande A étant formée de la manière suivante :

$$A = [a(\theta_1), \ a(\theta_2), \ ..., \ a(\theta_n)$$

où :

n : le nombre des cibles détectées,
$\theta_1, ..., \theta_n$ : les angles d'azimut des cibles respectives, et
$a(\theta_1), a(\theta_2), ..., a(\theta_n)$ : les vecteurs de commande provenant des paramètres des diagrammes d'antenne en fonction des angles d'azimut $\theta_1, ..., \theta_n$ respectifs,

dans lequel des matrices de commande préalablement inversées sont mémorisées dans une mémoire (7) du système de radar.

2. Système de radar selon la revendication 1, dans lequel l'unité d'émission et de réception (11) comprend un dispositif de génération de signal (1), une antenne principale (3) et une antenne d'élévation (4).

3. Système de radar selon la revendication 2, dans lequel l'unité d'émission et de réception (11) émet une pluralité de signaux par l'intermédiaire de l'antenne principale (3) et émet au moins un signal par l'intermédiaire de l'antenne d'élévation (4) qui correspond à l'un des signaux émis par l'intermédiaire de l'antenne principale (3).

4. Système de radar selon l'une quelconque des revendications précédentes, dans lequel la mémoire (7) est conçue pour stocker des relations prédéterminées entre les rapports de signal et les angles d'élévation et/ou pour stocker des résultats intermédiaires précalculés sur la base de la matrice de commande A.

5. Système de radar selon l'une quelconque des revendications précédentes, dans lequel le signal radar est un signal radar FMCW.

6. Véhicule automobile comprenant un système de radar selon l'une quelconque des revendications précédentes.

7. Procédé permettant de déterminer un angle d'élévation dans un système de radar, comprenant les étapes consistant à :

émettre et recevoir des signaux radar au moyen d'une unité d'émission et de réception (11) ;
déterminer (41) des paramètres cibles azimutaux, les paramètres cibles azimutaux comprenant une estimation d'angle d'azimut ;
**caractérisé en ce que** l'étape (41) consistant à déterminer (41) des paramètres cibles azimutaux détermine un nombre de cibles détectées et une estimation d'angle d'azimut pour chaque cible détectée ;
le procédé comprenant en outre les étapes suivantes consistant à :

former (42) une matrice de commande A sur la base des paramètres cibles azimutaux,
former (43) un pseudo-inverse de la matrice de commande A,
calculer des rapports d'amplitude des signaux de réception en intégrant le pseudo-inverse de la matrice de commande A, et
calculer (44) un angle d'élévation propre pour chaque cible détectée (31, 32) à partir des rapports d'amplitude calculés des signaux de réception,
la matrice de commande A étant formée de la manière suivante :

$$A = [a(\theta_1), a(\theta_2), ..., a(\theta_n)$$

où :

n : le nombre des cibles détectées,
$\theta_1, ..., \theta_n$ : les angles d'azimut des cibles respectives, et
$a(\theta_1), a(\theta_2), ... , a(\theta_n)$ : les vecteurs de commande provenant des paramètres des diagrammes d'antenne en fonction des angles d'azimut $\theta_1, ..., \theta_n$ respectifs,

dans lequel des matrices de commande préalablement inversées sont utilisées.

8. Procédé selon la revendication 7, comprenant en outre une étape consistant à classifier les cibles détectées.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010064348 A
- US 20080266171 A1
- US 20120112953 A1
- WO 2006094510 A1